# EUROPEAN PATENT APPLICATION

(11) **EP 4 582 744 A1**
(43) Date of publication of application: **09.07.2025**
(21) Application number: 23881592.2
(22) Date of filing: 27.09.2023
(51) Int. Cl.: F24C 15/20

(54) **RANGE HOOD**

(30) Priority: 27.10.2022 CN 202211325731
(71) Applicant: Guangdong Chengyi Technology Co., Ltd, Foshan, Guangdong 528305 (CN)
(72) Inventor: REN, Yong, Foshan, Guangdong 528305 (CN); CEN, Zhenzhou, Foshan, Guangdong 528305 (CN); QIN, Yue, Foshan, Guangdong 528305 (CN)
(74) Representative: Osterhoff, Utz
(86) International application number: PCT/CN2023/122272
(87) International publication number: WO 2024/088013

(57) **Abstract**

Disclosed is a range hood, including a current signal collector and a controller. The instruction acquisition module acquires an operation instruction and transmits the operation instruction to the calculation module; the calculation module parses the operation instruction, acquires a target operation parameter, and transmits the target operation parameter to the control module; the control module controls the operation of the fume exhaust fan based on the target operation parameter; the current signal collector acquires a current signal during the operation of the fume exhaust fan and transmits the current signal to the feedback module; the feedback module calculates an actual operation parameters of the fume exhaust fan based on the current signal, and transmits the actual operation parameters to the calculation module; the calculation module calculates a correction value based on the actual operation parameter and the target operation parameter, and transmits the correction value to the control module; the control module corrects the operation parameters of the fume exhaust fan based on the correction value.

## Description

### RANGE HOOD

This application claims priority to Chinese Patent Application No. 202211325731.4, filed on October 27, 2022, the entire contents of which are incorporated herein by reference.

### TECHNICAL FIELD

The present application relates to the technical field of range hoods, and in particular to a range hood.

### BACKGROUND

With the development of range hood technology, in order to improve the oil fume extraction performance of range hoods, most manufacturers generally adopt the solution of increasing the exhaust volume of range hoods. At present, the exhaust volume of range hoods has increased from 16 cubic meters per minute to 20 cubic meters per minute, 24 cubic meters per minute, and even 26 cubic meters per minute. However, increasing the exhaust volume of range hoods only meets the requirements of space exhaust. Without proper airflow organization, it is impossible to reduce oil fume pollution and control the direction of airflow by simply increasing the exhaust volume. Continuously increasing the exhaust volume will increase the consumption of electricity, exhaust a large amount of clean air in the house space, and the social benefits will deteriorate. In addition, traditional range hoods will have unstable operation.

### SUMMARY

Based on this, in order to solve the above technical problems, it is necessary to provide a range hood that can improve operating stability.

The present application provides a range hood, including: an air suction port; an air duct; a fume exhaust fan; and a current signal collector, the air suction port is communicated with the air duct, the fume exhaust fan is provided in the air duct, and the controller is connected to the fume exhaust fan;
the controller includes an instruction acquisition module, a calculation module, a control module and a feedback module; the instruction acquisition module is connected to the calculation module, the calculation module is connected to the control module, the control module is connected to the fume exhaust fan, the current signal collector is respectively connected to the fume exhaust fan and the feedback module, and the feedback module is connected to the calculation module; and
the instruction acquisition module is configured to acquire an operation instruction and transmit the operation instruction to the calculation module;
the calculation module is configured to parse the operation instruction, obtain a target operation parameter, and transmit the target operation parameter to the control module;
the control module is configured to control an operation of the fume exhaust fan based on the target operation parameter;
the current signal collector is configured to collect a current signal during the operation of the fume exhaust fan, and transmit the current signal to the feedback module;
the feedback module is configured to calculate an actual operation parameter of the fume exhaust fan based on the current signal, and transmit the actual operation parameter to the calculation module; and
the calculation module is configured to calculate a correction value based on the actual operation parameter and the target operation parameter, and transmit the correction value to the control module; and
the control module is configured to correct an operation parameter of the fume exhaust fan based on the correction value.

In an embodiment, in response to that a target power is carried by the operation instruction, the target operation parameter is the target power;
the control module is configured to control the fume exhaust fan to enter a target power operation period based on the target power;
in response to that a target air volume is carried by the operation instruction, the target operation parameter is the target air volume; and
the control module is configured to control the fume exhaust fan to enter a target air volume operation period based on the target air volume.

**In** an embodiment, the feedback module includes a power feedback unit;
in the target power operation period, the actual operation parameter is an actual power, the power feedback unit is configured to calculate an actual power of the fume exhaust fan based on the current signal, and transmit the actual power to the calculation module;
the calculation module is configured to calculate a power correction value based on the actual power and the target power, and transmit the power correction value to the control module; and
the control module is configured to correct the actual power of the fume exhaust fan based on the power correction value.

In an embodiment, the feedback module further includes a speed feedback unit;
in the target air volume operation period, the actual operation parameter is an actual speed, the power feedback unit is configured to calculate the actual speed of the fume exhaust fan based on the current signal, and transmit the actual speed to the calculation module;
the calculation module is configured to calculate a speed correction value based on the actual speed and the target air volume, and transmit the speed correction value to the control module; and
the control module is configured to correct the actual speed of the fume exhaust fan based on the speed correction value.

In an embodiment, in the target power operation period, a back pressure value detected by the range hood is within a first back pressure range, and the fume exhaust fan is configured to operate at the target power within a preset first error range; and
in the target air volume operation period, the back pressure value detected by the range hood is within a second back pressure range, and the fume exhaust fan is configured to operate at the target air volume within a preset second error range.

In an embodiment, a minimum value of the first back pressure range is equal to a maximum value of the second back pressure range, and the minimum value of the first back pressure range is between 150 Pa and 450 Pa.

In an embodiment, the range hood includes two or more working gears;
each of the working gears corresponds to a different target power; and each of the working gears corresponds to a different target air volume;
in the target power operation period, the range hood is configured to switch from a current working gear to a next working gear, and the fume exhaust fan is configured to switch from the target power corresponding to the current working gear to the target power corresponding to the next working gear; and
in the target air volume operation period, the range hood is configured to switch from the current working gear to the next working gear, and the fume exhaust fan is configured to switch from the target air volume corresponding to the current working gear to the target air volume corresponding to the next working gear.

In an embodiment, the preset first error range is between plus or minus 8% of the target power;
the working mode corresponding to the target power operation period is one or any combination of a constant-power mode, an under-power mode and an over-power mode;
the constant-power mode is that the fume exhaust fan operates according to the target power within a preset third error range, and the preset third error range is comprised in the preset first error range;
a change rate of the back pressure-air volume curve corresponding to the under-power mode is less than a change rate of the back pressure-air volume curve corresponding to the constant-power mode; in the under-power mode, an error of the actual operating power of the fume exhaust fan relative to the target power is a negative value difference set between the preset first error range and the preset third error range;
a change rate of the back pressure-air volume curve corresponding to the over-power mode is greater than a change rate of the back pressure-air volume curve corresponding to the constant-power mode; and in the over-power mode, an error of the actual operating power of the fume exhaust fan relative to the target power is a positive value difference set between the preset first error range and the preset third error range.

In an embodiment, the second back pressure range is between 1 Pa and 300 Pa; the preset second error range is between plus or minus 15% of the target air volume; the working mode corresponding to the target air volume operation period is one or any combination of a constant air volume mode, an intermediate extreme value mode and an oscillation mode;
the constant air volume mode is that the fume exhaust fan operates according to the target air volume within a preset fourth error range, and the preset fourth error range is comprised in the preset second error range;
in the intermediate extreme value mode, an actual output air volume of the fume exhaust fan is offset to be greater than or less than the target air volume; in the intermediate extreme value mode, an error of the actual output air volume of the fume exhaust fan corresponding to the target air volume is a difference set between the preset second error range and the preset fourth error range;
in the oscillation mode, an actual output air volume of the fume exhaust fan oscillates back and forth between less than the target air volume and greater than the target air volume; and in the oscillation mode, an error of the actual output air volume of the fume exhaust fan corresponding to the target air volume is the difference set between the preset second error range and the preset fourth error range.

In an embodiment, the range hood further includes an air collecting box, a through groove is opened at the air collecting box for accommodating the air suction port, an air speed at the air suction port is between 10 cubic meters per minute and 19 cubic meters per minute.

One of the above technical solutions has the following advantages and beneficial effects:
The controller for extracting oil fume provided by each embodiment of the present application includes an instruction acquisition module, a calculation module, a control module and a feedback module. The instruction acquisition module is connected to the calculation module. The calculation module is connected to the control module. The control module is connected to the fume exhaust fan. The current signal collector is respectively connected to the fume exhaust fan and the feedback module. The feedback module is connected to the calculation module. The current signal during the operation of the fume exhaust fan is collected by the current signal collector and transmitted to the feedback module. The feedback module calculates the actual operation parameters of the fume exhaust fan based on the current signal, and transmits the actual operation parameters to the calculation module. The calculation module calculates the correction value based on the actual operation parameters and the target operation parameters, and transmits the correction value to the control module. The control module corrects the operation parameters of the fume exhaust fan based on the correction value. By real-time monitoring of the operating status of the fume exhaust fan, the operating status of the fume exhaust fan is corrected in real time, thereby improving the operating stability of the fume exhaust fan.

### BRIEF DESCRIPTION OF THE DRAWINGS

FIG. 1 is a schematic structural diagram of a range hood according to an embodiment of the present application.
FIG. 2 is a schematic structural diagram of a controller according to an embodiment of the present application.
FIG. 3 is a schematic diagram of an operation process of a range hood according to an embodiment of the present application.
FIG. 4 is a schematic diagram of an operation mode of a target power operation period of the range hood according to an embodiment of the present application.
FIG. 5 is a schematic diagram of an operation mode of a target air volume operation period of the range hood according to an embodiment of the present application.
FIG. 6 is a schematic diagram of an operation mode of a target air volume operation period of the range hood according to an embodiment of the present application.
FIG. 7 is a schematic flowchart of a method for controlling a range hood according to an embodiment of the present application.

### DETAILED DESCRIPTION OF THE EMBODIMENTS

In order to make the purpose, technical solution and advantages of the present application more clearly understood, the present application is further described in detail below in conjunction with the accompanying drawings and embodiments. It should be understood that the specific embodiments described herein are only used to explain the present application and are not used to limit the present application.

The range hood 100 is a kitchen appliance for extracting oil fume generated during cooking. In order to increase the oil fume suction performance of the range hood 100, the generally adopted solution is to increase the exhaust volume of the range hood 100. However, simply increasing the exhaust volume of the range hood 100 fails to significantly enhance its suction performance in the absence of optimized airflow organization, but instead increases the energy consumption of the range hood 100.

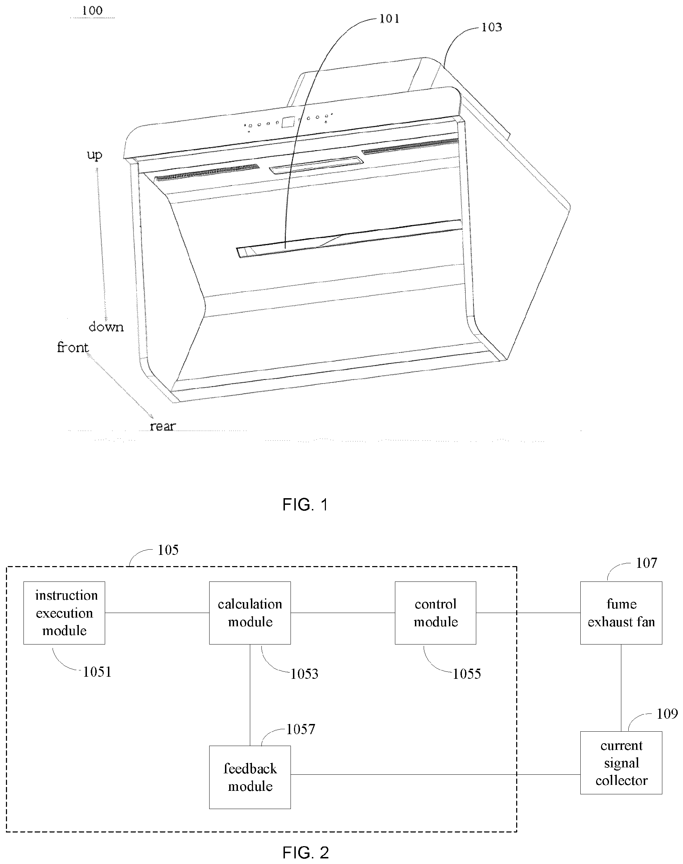

In order to solve the above technical problems, the present application provides a range hood 100. As shown in FIG. 1, the range hood 100 includes an air suction port 101, an air duct 103, a controller 105 and a fume exhaust fan 107. The air suction port 101 is communicated with the air duct 103, and the range hood 100 sucks the oil fume through the air suction port 101 and discharges the oil fume into the air duct 103. The air duct 103 is communicated with the outside world or the main air duct 103 of the house, so that the oil fume is discharged from the house. It should be noted that the air suction port 101 of the range hood 100 of the present application is in a shape of a flat long strip, and the caliber of the air suction port 101 is small. Under the condition that the air speed provided by the fume exhaust fan 107 is the same, the negative pressure generated at the air suction port 101 of the range hood 100 of the present application is greater than the negative pressure generated by the air suction port 101 with a large caliber, so that it is more conducive to sucking oil fume.

The fume exhaust fan 107 is provided in the air duct 103. When the fume exhaust fan 107 is working, which drives the air in the air duct 103 to flow outward, thereby providing the range hood 100 with suction force to suck oil fume. In an embodiment, the range hood 100 further includes an air collecting box, a through groove is opened at the air collecting box for accommodating the air suction port 101. The air collecting box has left and right baffles and a guide air curtain. When the fume exhaust fan 107 operates stably, the air speed at the air suction port 101 is between 11 cubic meters per minute and 18 cubic meters per minute. For example, the air speed at the air suction port 101 is 12 cubic meters per minute, 13 cubic meters per minute, 14 cubic meters per minute, 15 cubic meters per minute, 16 cubic meters per minute or 17 cubic meters per minute.

As shown in FIG. 2, the range hood 100 further includes a current signal collector 109. The controller 105 includes an instruction acquisition module 1051, a calculation module 1053, a control module 1055 and a feedback module 1057. The instruction acquisition module 1051 is connected to the calculation module 1053, the calculation module 1053 is connected to the control module 1055, the control module 1055 is connected to the fume exhaust fan 107, and the current signal collector 109 is respectively connected to the fume exhaust fan 107 and the feedback module 1057. The feedback module 1057 is connected to the calculation module 1053.

During the operation of the range hood, the instruction acquisition module 1051 obtains the operation instruction and transmits the operation instruction to the calculation module 1053. The calculation module 1053 parses the operation instruction, obtains the target operation parameter, and transmits the target operation parameter to the control module 1055. The control module 1055 controls the operation of the fume exhaust fan 107 based on the target operation parameter. The current signal collector 109 collects the current signal during the operation of the fume exhaust fan 107, and transmits the current signal to the feedback module 1057. The feedback module 1057 calculates the actual operation parameter of the fume exhaust fan 107 based on the current signal, and transmits the actual operation parameter to the calculation module 1053. The calculation module 1053 calculates the correction value based on the actual operation parameters and the target operation parameters, and transmits the correction value to the control module 1055. The control module 1055 corrects the operation parameters of the fume exhaust fan 107 based on the correction value. The control module 1055 performs initial control on the fume exhaust fan 107 based on the target operation parameters. During the operation of the fume exhaust fan 107, the current signal collector 109 collects the actual operation parameters in the fume exhaust fan 107 and transmits them to the feedback module 1057. The feedback module 1057 calculates the correction value based on the actual operation parameters and the target operation parameters, and transmits the correction value to the control module 1055. The control module 1055 corrects the operation of the fume exhaust fan 107 based on the correction value to make the operation of the fume exhaust fan 107 stable. It should be noted that the source of the instruction acquired by the instruction acquisition module 1051 can be input by the user through the instruction input part of the range hood, or it can be generated by the controller 105.

In an embodiment, in response to that a target power is carried by the operation instruction, the target operation parameter is the target power. The control module 1055 controls the fume exhaust fan 107 to enter the target power operation period based on the target power. In this embodiment, the feedback module 1057 includes a power feedback unit. In the target power operation period, the actual operation parameter is the actual power. The power feedback unit calculates the actual power of the fume exhaust fan 107 based on the current signal, and transmits the actual power to the calculation module 1053. The calculation module 1053 calculates the power correction value based on the actual power and the target power, and transmits the power correction value to the control module 1055. The control module 1055 corrects the actual power of the fume exhaust fan 107 based on the power correction value.

In an embodiment, in response to that a target air volume is carried by the operation instruction, the target operation parameter is the target air volume. The control module 1055 controls the fume exhaust fan 107 to enter the target air volume operation period based on the target air volume. In this embodiment, the feedback module 1057 also includes a speed feedback unit. In the target air volume operation period, the actual operation parameter is an actual speed, the power feedback unit calculates the actual speed of the fume exhaust fan 107 based on the current signal, and transmits the actual speed to the calculation module 1053. The calculation module 1053 calculates the speed correction value based on the actual speed and the target air volume, and transmits the speed correction value to the control module 1055. The control module 1055 corrects the actual speed of the fume exhaust fan 107 based on the speed correction value.

The controller 105 for extracting oil fume provided in each embodiment of the present application includes an instruction acquisition module, a calculation module, a control module and a feedback module. The instruction acquisition module is connected to the calculation module. The calculation module is connected to the control module. The control module is connected to the fume exhaust fan. The current signal collector is respectively connected to the fume exhaust fan and the feedback module. The feedback module is connected to the calculation module. The current signal during the operation of the fume exhaust fan is collected by the current signal collector and transmitted to the feedback module. The feedback module calculates the actual operation parameters of the fume exhaust fan based on the current signal, and transmits the actual operation parameters to the calculation module. The calculation module calculates the correction value based on the actual operation parameters and the target operation parameters, and transmits the correction value to the control module. The control module corrects the operation parameters of the fume exhaust fan based on the correction value. By real-time monitoring of the operating state of the fume exhaust fan, the operating state of the fume exhaust fan is corrected in real time, thereby improving the operating stability of the fume exhaust fan.

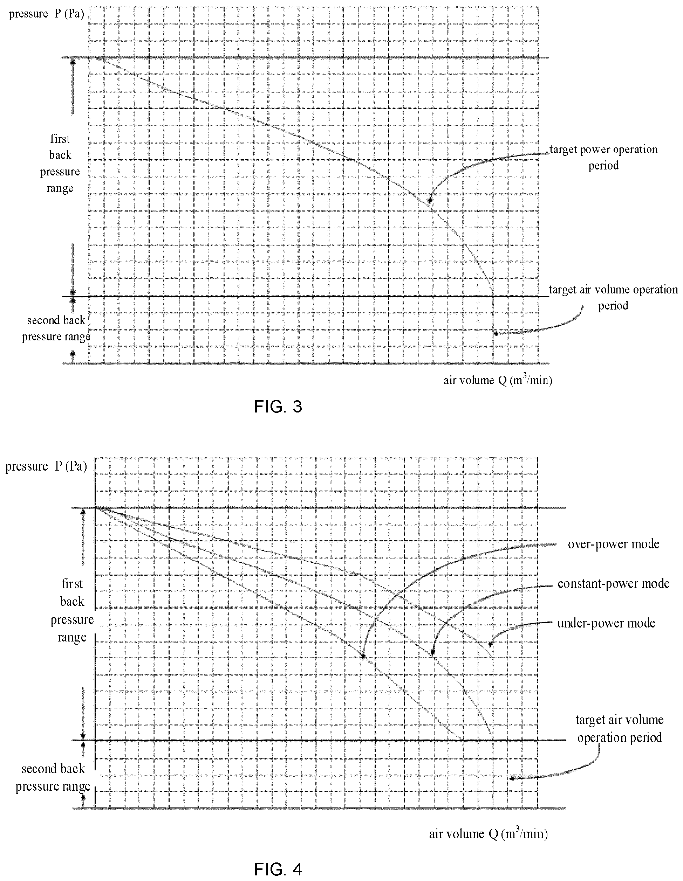

As shown in FIG. 3, the present application distinguishes the target power operation period and the target air volume operation period by the back pressure value, that is, when the back pressure value of the range hood 100 is within the first back pressure range, the fume exhaust fan 107 of the range hood 100 enters the target power operation period. When the back pressure value of the range hood 100 is within the second back pressure range, the fume exhaust fan 107 of the range hood 100 enters the target air volume operation period. To implement this solution, the range hood 100 includes a back pressure detection device and a controller 105. The back pressure detection device detects the back pressure value of the range hood 100 in real time or periodically, and transmits the detected back pressure value to the controller 105. The controller 105 controls the fume exhaust fan 107 to enter the target power operation period or the target air volume operation period based on the back pressure value. It should be noted that in order to ensure that the air flow of the air duct 103 is driven by the target power operation period first, and the back pressure of the range hood 100 is reduced, the back pressure value in the first back pressure range is greater than the back pressure value in the second back pressure range. In an embodiment, the minimum value of the first back pressure range is equal to the maximum value of the second back pressure range, that is, the first back pressure range is connected to the second back pressure range. In an embodiment, the back pressure detection device is a back pressure sensor. In an embodiment, the controller 105 is a control mainboard, a Microcontroller Unit (MCU) or a single chip microcomputer.

The target power operation period refers to the fume exhaust fan 107 operating at a power close to or equal to the target power. Specifically, when the range hood 100 is in the target power operation period, the back pressure value detected by the range hood 100 is within the first back pressure range, and the fume exhaust fan 107 operates at the target power within the preset first error range. In an embodiment, the minimum value of the first back pressure range is between 150 Pa and 450 Pa, for example, the minimum value of the first back pressure range is 200 Pa, 250 Pa, 300 Pa, 350 Pa or 400 Pa. The maximum value of the first back pressure range may be the actual back pressure value of the range hood 100 when the range hood 100 stops working, measured by the back pressure detection device. The preset first error range is configured to limit the actual working power range of the fume exhaust fan 107 in the target power operation period. In an embodiment, the preset first error range is between plus or minus 8% of the target power, that is, the actual working power range of the fume exhaust fan 107 in the target power operation period is between (target power-target power*8%) and (target power+target power*8%). For example, if the target power is 35W, the actual working power range of the fume exhaust fan 107 in the target power operation period is 32.2W to 37.8 W. Of course, it can be understood that the preset first error range is between plus or minus 8% of the target power as an example, and the preset first error range can be set according to actual needs, and is not specifically limited here.

In order to ensure that the fume exhaust fan 107 operates according to the target power within the preset first error range, in the target power operation period, the controller 105 detected by the range hood 100 controls the actual output air volume of the fume exhaust fan 107 based on the detected back pressure value, so that the fume exhaust fan 107 operates according to the target power within the preset first error range. It should be noted that the range hood 100 may detect the back pressure value of the range hood 100 through the back pressure detection device, and transmit the detected back pressure value to the controller 105. In the target power operation period, different back pressure values correspond to different actual output air volumes, that is, corresponding to different speeds of the fume exhaust fan 107. The controller 105 controls the speed of the fume exhaust fan 107 based on the acquired back pressure value, and controls the actual output air volume of the fume exhaust fan 107 to maintain the fume exhaust fan 107 to operate at the target power within the preset first error range.

In the target power operation period, in order to maintain the fume exhaust fan 107 to operate at the target power within the preset first error range. As shown in FIG. 4, the working mode corresponding to the target power operation period is one or any combination of constant-power mode, under-power mode and over-power mode. In an embodiment, the working mode corresponding to the target power operation period is a constant-power mode. In an embodiment, the working mode corresponding to the target power operation period is an under-power mode. In an embodiment, the working mode corresponding to the target power operation period is an over-power mode. In an embodiment, the working mode corresponding to the target power operation period is a combination of constant-power mode and under-power mode. In an embodiment, the working mode corresponding to the target power operation period is a combination of under-power mode and over-power mode. In an embodiment, the working mode corresponding to the target power operation period is a combination of constant-power mode and over-power mode. In an embodiment, the working mode corresponding to the target power operation period is a combination of constant-power mode, under-power mode and over-power mode.

It should be noted that the constant-power mode refers to the actual operating power of the fume exhaust fan 107 is expected to reach the target power. The constant-power mode is that the fume exhaust fan 107 operates according to the target power within the preset third error range. The preset third error range is comprised in the preset first error range, indicating that in the constant-power mode, the actual operating power of the fume exhaust fan 107 is more accurate. For example, the preset third error range is plus or minus 3% of the target power, the preset third error range is plus or minus 0.5% of the target power, or the preset third error range is zero.

The under-power mode refers to the fume exhaust fan 107 operating at an actual operating power lower than the target power. The actual operating power of the fume exhaust fan 107 in the under-power mode is less than the actual operating power of the fume exhaust fan 107 in the constant-power mode, so that the change rate of the back pressure-air volume curve corresponding to the under-power mode is less than the change rate of the back pressure-air volume curve corresponding to the constant-power mode. A change rate of the back pressure-air volume curve refers to the degree to which the air volume changes with the back pressure, or refers to a degree to which the back pressure changes with the air volume. In the under-power mode, the error of the actual operating power of the fume exhaust fan 107 relative to the target power is the negative value difference set between the preset first error range and the preset third error range. It should be noted that the error of the actual operating power of the fume exhaust fan 107 relative to the target power refers to the difference between the actual operating power of the fume exhaust fan 107 and the target power. Since the preset first error range includes the preset third error range, after the preset first error range and the preset third error range are subtracted, a set containing negative values and a set containing positive values are obtained. For example, when the first error range is plus or minus 8% of the target power, and the preset third error range is plus or minus 3% of the target power, after the preset first error range and the preset third error range are subtracted, the set containing negative values is from minus 8% of the target power to minus 3% of the target power, and the set containing positive values is from plus 3% of the target power to plus 8% of the target power. The negative value difference set is from minus 8% of the target power to minus 3% of the target power.

The over-power mode refers to the fume exhaust fan 107 operating at an actual operating power higher than the target power. The actual operating power of the fume exhaust fan 107 in the over-power mode is greater than the actual operating power of the fume exhaust fan 107 in the constant-power mode, so that the change rate of the back pressure-air volume curve corresponding to the over-power mode is greater than the change rate of the back pressure-air volume curve corresponding to the constant-power mode. A change rate of the back pressure-air volume curve refers to the degree to which the air volume changes with the back pressure, or refers to a degree to which the back pressure changes with the air volume. In the over-power mode, the error of the actual operating power of the fume exhaust fan 107 relative to the target power is the positive value difference set between the preset first error range and the preset third error range. It should be noted that the error of the actual operating power of the fume exhaust fan 107 relative to the target power refers to the difference between the actual operating power of the fume exhaust fan 107 and the target power. Since the preset first error range includes the preset third error range, after the preset first error range and the preset third error range are subtracted, a set containing negative values and a set containing positive values are obtained. For example, when the first error range is plus or minus 8% of the target power, and the preset third error range is plus or minus 0.5% of the target power, after the difference between the preset first error range and the preset third error range is taken, the set containing negative values is from minus 8% of the target power to minus 0.5% of the target power, and the set containing positive values is from plus 0.5% of the target power to plus 8% of the target power.

The target air volume operation period refers to an operation of the fume exhaust fan 107 at a target air volume close to or equal to the target air volume. Specifically, when the range hood 100 is in the target air volume operation period, the back pressure value detected by the range hood 100 is within the second back pressure range, and the fume exhaust fan 107 operates at the target air volume within the preset second error range. In an embodiment, the second back pressure range is between 1 Pa and 300 Pa. In an embodiment, the second back pressure range may also be between 1 Pa and 250 Pa, or between 1 Pa and 200 Pa. The preset second error range is configured to limit the actual working air volume range of the fume exhaust fan 107 in the target air volume operation period. In an embodiment, the preset second error range is between plus or minus 15% of the target air volume, that is, the actual working air volume range of the fume exhaust fan 107 in the target air volume operation period is between (target air volume-target air volume*15%) and (target air volume+target air volume*15%). For example, if the target air volume is 11 cubic meters per minute, the actual operating power range of the fume exhaust fan 107 during the target air volume operation period is 9.35 cubic meters per minute to 12.65 cubic meters per minute. If the target air volume is 12 cubic meters per minute, the actual operating power range of the fume exhaust fan 107 during the target air volume operation period is 10.2 cubic meters per minute to 13.8 cubic meters per minute. If the target air volume is 13 cubic meters per minute, the actual operating power range of the fume exhaust fan 107 during the target air volume operation period is 11.05 cubic meters per minute to 14.95 cubic meters per minute. Of course, it can be understood that the preset second error range is between plus or minus 15% of the target air volume as an example, and the preset second error range can be set according to actual needs and is not specifically limited here.

In order to ensure that the fume exhaust fan 107 operates according to the target air volume within the preset second error range, in the target air volume operation period, the controller 105 detected by the range hood 100 controls the input power of the fume exhaust fan 107 based on the detected back pressure value, so that the fume exhaust fan 107 operates according to the target air volume within the preset second error range. It should be noted that the range hood 100 may detect the back pressure value of the range hood 100 through the back pressure detection device, and transmit the detected back pressure value to the controller 105. In the target air volume operation period, different back pressure values correspond to different input powers, that is, corresponding to different speeds of the fume exhaust fan 107. The controller 105 controls the input power of the fume exhaust fan 107 based on the acquired back pressure value, and controls the speed of the fume exhaust fan 107 to maintain the fume exhaust fan 107 operating according to the target air volume within the preset second error range.

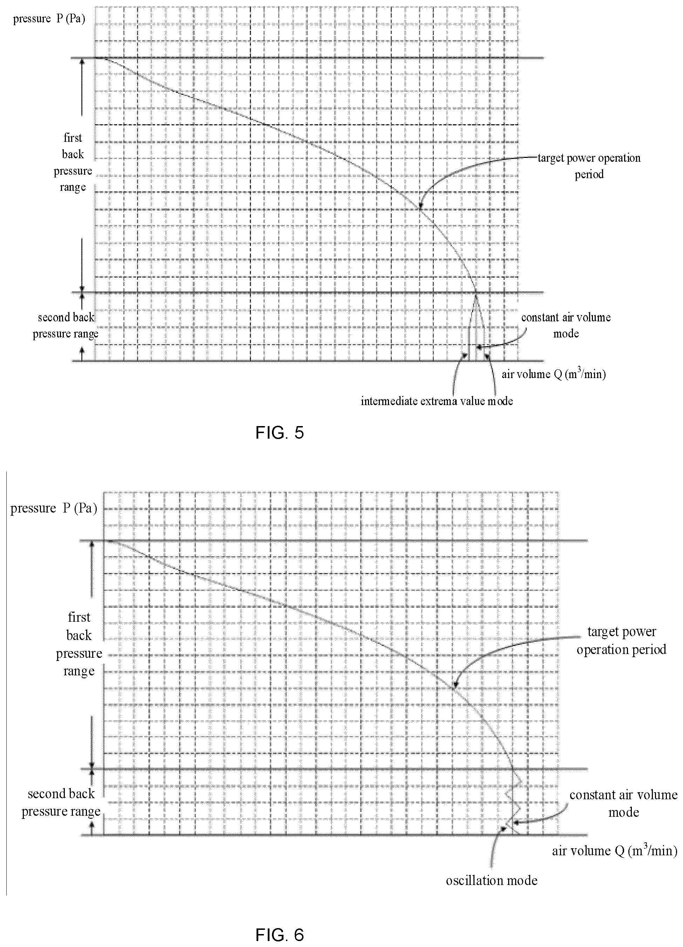

In the target air volume operation period, in order to maintain the fume exhaust fan 107 operating according to the target power within the preset second error range. The working mode corresponding to the target air volume operation period is one or any combination of a constant air volume mode, an intermediate extreme value mode (as shown in FIG. 5) and an oscillation mode (as shown in FIG. 6). In an embodiment, the working mode corresponding to the target air volume operation period is a constant air volume mode. In an embodiment, the working mode corresponding to the target air volume operation period is an intermediate extreme value mode. In an embodiment, the working mode corresponding to the target air volume operation period is an oscillation mode. In an embodiment, the working mode corresponding to the target air volume operation period is a combination of an oscillation mode and an intermediate extreme value mode. In an embodiment, the working mode corresponding to the target air volume operation period is a combination of an intermediate extreme value mode and an oscillation mode. In an embodiment, the working mode corresponding to the target air volume operation period is a combination of a constant air volume mode and an oscillation mode. In an embodiment, the working mode corresponding to the target air volume operation period is any combination of a constant air volume mode, an intermediate extreme value mode and an oscillation mode.

It should be noted that the constant air volume mode refers to the actual output air volume of the expected fume exhaust fan 107 to reach the target air volume. The constant air volume mode is that the fume exhaust fan 107 operates according to the target air volume within the preset fourth error range. The preset fourth error range is comprised in the preset second error range, indicating that in the constant air volume mode, the actual output air volume of the fume exhaust fan 107 is more accurate. For example, the preset fourth error range is plus or minus 5% of the target air volume, the preset fourth error range is plus or minus 2% of the target power, or the preset fourth error range is zero.

The intermediate extreme value mode refers to the operation of the fume exhaust fan 107 at an actual output air volume higher than the target air volume, that is, in the intermediate extreme value mode, the actual output air volume of the fume exhaust fan 107 is offset in the direction of being greater than the target air volume; or the operation at an actual output air volume lower than the target air volume, that is, in the intermediate extreme value mode, the actual output air volume of the fume exhaust fan 107 is offset in the direction of being less than the target air volume. It should be noted that in the intermediate extreme value mode, the error of the actual output air volume of the fume exhaust fan 107 corresponding to the target air volume is the difference set between the preset second error range and the preset fourth error range. The error of the actual output air volume of the fume exhaust fan 107 corresponding to the target air volume refers to the difference between the actual output air volume of the fume exhaust fan 107 and the target air volume. Specifically, since the preset second error range includes the preset fourth error range, after the preset second error range and the preset fourth error range are subtracted, a set containing negative values and a set containing positive values are obtained. When the actual output air volume of the fume exhaust fan 107 is offset in the direction of being greater than the target air volume, the error of the actual output air volume of the fume exhaust fan 107 corresponding to the target air volume is a positive value set (i.e., a set containing positive values). When the actual output air volume of the fume exhaust fan 107 is offset in the direction of being less than the target air volume, the error of the actual output air volume of the fume exhaust fan 107 corresponding to the target air volume is a negative value set (i.e., a set containing negative values). For example, when the preset second error range is plus or minus 15% of the target air volume, the fourth error range is plus or minus 2% of the target power. After the preset second error range and the preset fourth error range are subtracted, the set containing negative values is from minus 15% of the target air volume to minus 2% of the target power, and the set containing positive values is from plus 2% of the target air volume to plus 15% of the target power. When the actual output air volume of the fume exhaust fan 107 is offset in the direction of being greater than the target air volume, the error of the actual output air volume of the fume exhaust fan 107 corresponding to the target air volume is from positive 2% of the target air volume to positive 15% of the target power. When the actual output air volume of the fume exhaust fan 107 is offset in the direction of being less than the target air volume, the error of the actual output air volume of the fume exhaust fan 107 corresponding to the target air volume is from negative 15% of the target air volume to negative 2% of the target power.

The oscillation mode refers to the oscillation of the actual output air volume of the fume exhaust fan 107, that is, in the oscillation mode, the air volume output by the fume exhaust fan 107 oscillates back and forth between being less than the target air volume and being greater than the target air volume. It should be noted that, in the oscillation mode, the error of the actual output air volume of the fume exhaust fan 107 corresponding to the target air volume is the difference set between the preset second error range and the preset fourth error range. The error of the actual output air volume of the fume exhaust fan 107 corresponding to the target air volume refers to the difference between the actual output air volume of the fume exhaust fan 107 and the target air volume. Specifically, since the preset second error range includes the preset fourth error range, after the preset second error range and the preset fourth error range are subtracted, a set containing negative values and a set containing positive values are obtained. For example, when the preset second error range is plus or minus 15% of the target air volume, the fourth error range is plus or minus 5% of the target power. After the preset second error range and the preset fourth error range are subtracted, the set containing negative values is from minus 15% of the target air volume to minus 5% of the target power, and the set containing positive values is from plus 5% of the target air volume to plus 15% of the target power. The actual output air volume of the fume exhaust fan 107 corresponds to the error of the target air volume from minus 15% of the target air volume to minus 5% of the target power, and from plus 5% of the target air volume to plus 15% of the target power.

In order to adapt to different cooking processes or techniques, in an embodiment, the range hood 100 includes two or more working gears. Each working gear corresponds to a different target power, and each working gear corresponds to a different target air volume. For example, in an embodiment, the range hood 100 includes three gears: a low gear, a medium gear and a high gear. For example, in an embodiment, the target power corresponding to the low gear is 35W, and the corresponding target air volume is 11 cubic meters per minute. The target power corresponding to the medium gear is 37W, and the corresponding target air volume is 12 cubic meters per minute. The target power corresponding to the high gear is 39W, and the corresponding target air volume is 13 cubic meters per minute.

During the gear switching process, according to the current operating period of the fume exhaust fan 107.

If the range hood 100 is switched from the current working gear to the next working gear in the target power operating period, the fume exhaust fan 107 switches from the target power corresponding to the current working gear to the target power corresponding to the next working gear. If the range hood 100 is switched from the current working gear to the next working gear within the target air volume operating period, the fume exhaust fan 107 switches from the target air volume corresponding to the current working gear to the target air volume corresponding to the next working gear.

The range hood 100 provided in each embodiment of the present application includes an air suction port 101, an air duct 103, and a fume exhaust fan 107. The air suction port 101 is communicated with the air duct 103, and the fume exhaust fan 107 is provided in the air duct 103. During the operation of the range hood 100, the working process of the fume exhaust fan 107 at least includes a target power operation period corresponding to the first back pressure range, and a target air volume operation period corresponding to the second back pressure range. Specifically, in the target power operation period, the back pressure value detected by the range hood 100 is within the first back pressure range, and the fume exhaust fan 107 operates at the target power within the preset first error range. In the target air volume operation period, the back pressure value detected by the range hood 100 is within the second back pressure range, and the fume exhaust fan 107 operates at the target air volume within the preset second error range. The present application divides the fume exhaust operation process of the range hood 100 into a target power operation period and a target air volume operation period. The target power operation period is configured to drive the airflow on the oil fume output side of the range hood 100 to reduce the back pressure of the range hood 100. When the back pressure of the range hood 100 drops to a certain value, it is switched to the target air volume operation period to allow the fume exhaust fan 107 to maintain operation according to the target air volume. As the airflow flows, the back pressure of the range hood 100 is smaller, and the input electrical power required to maintain operation according to the target air volume is smaller, thereby achieving the goal of using the target power operation period to form a good airflow organization and improve the oil fume extraction effect, and using the target air volume operation period to reduce power consumption.

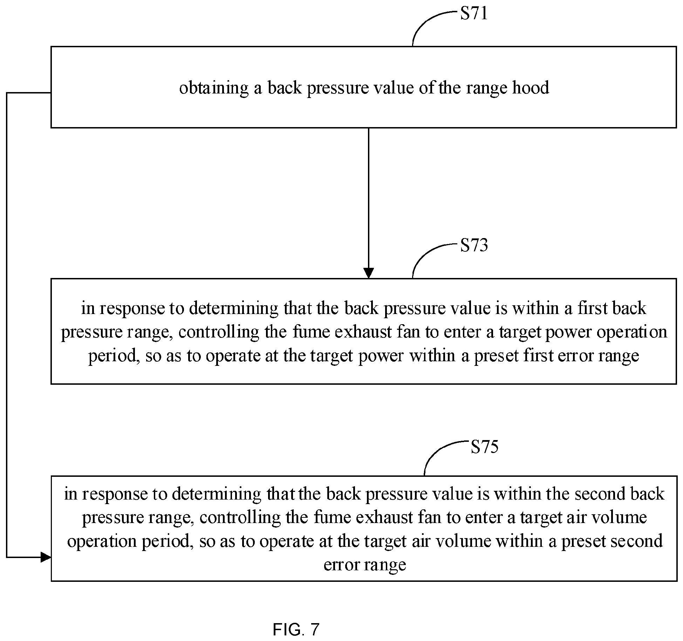

In an embodiment, the present application further provides a control method for a range hood 100, which is applied to the range hood 100, the range hood 100 includes an air suction port 101, an air duct 103, and a fume exhaust fan 107. The air suction port 101 is communicated with the air duct 103, and the fume exhaust fan 107 is provided in the air duct 103, as shown in FIG. 7, including:
Step S71, obtaining a back pressure value of the range hood 100. The controller 105 of the range hood 100 obtains a back pressure value collected by a back pressure detection device of the range hood 100.

Step S73, in response to determining that the back pressure value is within a first back pressure range, controlling the fume exhaust fan 107 to enter a target power operation period, so as to operate at the target power within a preset first error range. In response to the controller 105 of the range hood 100 determining that the back pressure value is within the first back pressure range, the fume exhaust fan 107 is controlled to enter the target power operation period to operate at the target power within the preset first error range. In an embodiment, the controller 105 of the range hood 100 controls the actual output air volume of the fume exhaust fan 107 based on the acquired back pressure value, so that the fume exhaust fan 107 operates at the target power within the preset first error range.

Step S75, in response to determining that the back pressure value is within the second back pressure range, controlling the fume exhaust fan 107 to enter a target air volume operation period, so as to operate at the target air volume within a preset second error range. In response to the controller 105 of the range hood 100 determining that the back pressure value is within the second back pressure range, the fume exhaust fan 107 is controlled to enter the target air volume operation period to operate at the target air volume within the preset second error range. In an embodiment, the controller 105 of the range hood 100 controls the input power of the fume exhaust fan 107 based on the acquired back pressure value, so that the fume exhaust fan 107 operates according to the target air volume within the preset second error range. It should be noted that in an embodiment, the minimum value of the first back pressure range is equal to the maximum value of the second back pressure range. The minimum value of the first back pressure range ranges from 150 Pa to 450 Pa. The preset first error range is between plus or minus 8% of the target power. The second back pressure range is between 1 Pa and 300 Pa. The preset second error range is between plus or minus 15% of the target air volume.

It should be noted that the steps of the control method of the range hood 100 of the present application are the same as those in the range hood 100 of the present application. For details, please refer to the range hood 100 of the present application, which will not be repeated here.

It should be understood that although the steps in the flowchart of FIG. 6 are displayed in sequence according to the instructions of the arrows, these steps are not necessarily executed in the order indicated by the arrows. Unless otherwise specified herein, the execution of these steps is not strictly limited in order, and these steps can be executed in other orders. Moreover, at least a part of the steps in FIG. 6 may include multiple sub-steps or multiple stages, and these sub-steps or stages are not necessarily executed at the same time, but can be executed at different times. The execution order of these sub-steps or stages is not necessarily sequential, but can be executed in turn or alternately with other steps or at least a part of the sub-steps or stages of other steps.

The technical features of the above embodiments can be combined arbitrarily. In order to make the description concise, all possible combinations of the technical features in the above embodiments are not described. However, as long as there is no contradiction in the combination of these technical features, they should be considered to be within the scope of this specification.

The above contents are only some embodiments of the present application, the descriptions thereof are relatively specific and detailed, but they cannot be understood as limiting the scope of the patent application. It should be pointed out that, for a person of ordinary skill in the art, several variations and improvements can be made without departing from the concept of the present application, and these all belong to the protection scope of the present application. Therefore, the protection scope of the patent application shall be subject to the attached claims.

## Claims

1. A range hood, **characterized by** comprising:
a controller;
an air suction port;
an air duct;
a fume exhaust fan; and
a current signal collector, wherein:
the air suction port is communicated with the air duct, the fume exhaust fan is provided in the air duct, and the controller is connected to the fume exhaust fan;
the controller comprises an instruction acquisition module, a calculation module, a control module and a feedback module;
the instruction acquisition module is connected to the calculation module, the calculation module is connected to the control module, the control module is connected to the fume exhaust fan, the current signal collector is respectively connected to the fume exhaust fan and the feedback module, and the feedback module is connected to the calculation module;
the instruction acquisition module is configured to acquire an operation instruction and transmit the operation instruction to the calculation module;
the calculation module is configured to parse the operation instruction, obtain a target operation parameter, and transmit the target operation parameter to the control module;
the control module is configured to control an operation of the fume exhaust fan based on the target operation parameter;
the current signal collector is configured to collect a current signal during the operation of the fume exhaust fan, and transmit the current signal to the feedback module;
the feedback module is configured to calculate an actual operation parameter of the fume exhaust fan based on the current signal, and transmit the actual operation parameter to the calculation module;
the calculation module is configured to calculate a correction value based on the actual operation parameter and the target operation parameter, and transmit the correction value to the control module; and
the control module is configured to correct an operation parameter of the fume exhaust fan based on the correction value.

2. The range hood according to claim 1, wherein:
in response to that a target power is carried by the operation instruction, the target operation parameter is the target power;
the control module is configured to control the fume exhaust fan to enter a target power operation period based on the target power;
in response to that a target air volume is carried by the operation instruction, the target operation parameter is the target air volume; and
the control module is configured to control the fume exhaust fan to enter a target air volume operation period based on the target air volume.

3. The range hood according to claim 2, wherein:
the feedback module comprises a power feedback unit;
in the target power operation period, the actual operation parameter is an actual power, the power feedback unit is configured to calculate an actual power of the fume exhaust fan based on the current signal, and transmit the actual power to the calculation module;
the calculation module is configured to calculate a power correction value based on the actual power and the target power, and transmit the power correction value to the control module; and
the control module is configured to correct the actual power of the fume exhaust fan based on the power correction value.

4. The range hood according to claim 3, wherein:
the feedback module further comprises a speed feedback unit;
in the target air volume operation period, the actual operation parameter is an actual speed, the power feedback unit is configured to calculate the actual speed of the fume exhaust fan based on the current signal, and transmit the actual speed to the calculation module;
the calculation module is configured to calculate a speed correction value based on the actual speed and the target air volume, and transmit the speed correction value to the control module; and
the control module is configured to correct the actual speed of the fume exhaust fan based on the speed correction value.

5. The range hood according to any one of claims 2 to 4, wherein:
in the target power operation period, a back pressure value detected by the range hood is within a first back pressure range, and the fume exhaust fan is configured to operate at the target power within a preset first error range; and
in the target air volume operation period, the back pressure value detected by the range hood is within a second back pressure range, and the fume exhaust fan is configured to operate at the target air volume within a preset second error range.

6. The range hood according to claim 5, wherein a minimum value of the first back pressure range is equal to a maximum value of the second back pressure range, and the minimum value of the first back pressure range is between 150 Pa and 450 Pa.

7. The range hood according to claim 5, wherein:
the range hood comprises two or more working gears;
each of the working gears corresponds to a different target power; and each of the working gears corresponds to a different target air volume;
in the target power operation period, the range hood is configured to switch from a current working gear to a next working gear, and the fume exhaust fan is configured to switch from the target power corresponding to the current working gear to the target power corresponding to the next working gear; and
in the target air volume operation period, the range hood is configured to switch from the current working gear to the next working gear, and the fume exhaust fan is configured to switch from the target air volume corresponding to the current working gear to the target air volume corresponding to the next working gear.

8. The range hood according to claim 5, wherein:
the preset first error range is between plus or minus 8% of the target power;
the working mode corresponding to the target power operation period is one or any combination of a constant-power mode, an under-power mode and an over-power mode;
the constant-power mode is that the fume exhaust fan operates according to the target power within a preset third error range, and the preset third error range is comprised in the preset first error range;
a change rate of the back pressure-air volume curve corresponding to the under-power mode is less than a change rate of the back pressure-air volume curve corresponding to the constant-power mode;
in the under-power mode, an error of the actual operating power of the fume exhaust fan relative to the target power is a negative value difference set between the preset first error range and the preset third error range;
a change rate of the back pressure-air volume curve corresponding to the over-power mode is greater than a change rate of the back pressure-air volume curve corresponding to the constant-power mode; and
in the over-power mode, an error of the actual operating power of the fume exhaust fan relative to the target power is a positive value difference set between the preset first error range and the preset third error range.

9. The range hood according to claim 5, wherein:
the second back pressure range is between 1 Pa and 300 Pa;
the preset second error range is between plus or minus 15% of the target air volume;
the working mode corresponding to the target air volume operation period is one or any combination of a constant air volume mode, an intermediate extreme value mode and an oscillation mode;
the constant air volume mode is that the fume exhaust fan operates according to the target air volume within a preset fourth error range, and the preset fourth error range is comprised in the preset second error range;
in the intermediate extreme value mode, an actual output air volume of the fume exhaust fan is offset to be greater than or less than the target air volume;
in the intermediate extreme value mode, an error of the actual output air volume of the fume exhaust fan corresponding to the target air volume is a difference set between the preset second error range and the preset fourth error range;
in the oscillation mode, an actual output air volume of the fume exhaust fan oscillates back and forth between less than the target air volume and greater than the target air volume; and
in the oscillation mode, an error of the actual output air volume of the fume exhaust fan corresponding to the target air volume is the difference set between the preset second error range and the preset fourth error range.

10. The range hood according to claim 5, further comprising:
an air collecting box,
wherein a through groove is opened at the air collecting box for accommodating the air suction port, an air speed at the air suction port is between 10 cubic meters per minute and 19 cubic meters per minute.
